# FASCICULE DE BREVET EUROPEEN

(11) **EP 3 415 476 B1**
(45) Date de publication et mention de la délivrance du brevet: **07.09.2022**
(21) Numéro de dépôt: 18177600.6
(22) Date de dépôt: 29.11.2011
(51) Int. Cl.: C03C 25/26, C09J 11/00, D04H 1/42, D04H 1/58, D04H 1/64, D04H 13/00, E04B 1/74, D04H 1/4218, D04H 1/587, D04H 1/4209, C03C 13/06, C03C 25/32, C08K 3/24, D04H 1/425, D04H 1/4282, D04H 1/435, E04B 1/76

(54) **PRODUITS ISOLANTS ACOUSTIQUE ET/OU THERMIQUE À BASE DE FIBRES MINERALES, ENCOLLÉS À L'AIDE D'UNE COMPOSITION D'ENCOLLAGE COMPRENANT DU SACCHAROSE ET DU SULFATE D'AMMONIUM, ET LEUR PROCÉDÉ D'OBTENTION**
SCHALL- UND HITZEDÄMMENDE PRODUKTE AUS MINERALFASERN, DIE MIT EINER KLEBER-ZUSAMMENSETUNG AUS SACCHAROSE UND AMMONIUMSULFAT GEKLEBT WERDEN, UND DEREN HERSTELLUNGSVERFAHREN
ACOUSTICALLY AND/OR THERMALLY ISOLATING PRODUCTS BASED ON MINERAL FIBERS, BONDED USING A SIZING COMPOSITION COMPRISING SUCROSE AND AMMONIUM SULFATE, AND THEIR PROCESS OF MANUFACTURE

(30) Priorité: 30.11.2010 FR 1059898
(43) Date de publication de la demande: 19.12.2018
(62) Demande divisionnaire de: 11799793.2
(73) Titulaire: SAINT-GOBAIN ISOVER, 92400 Courbevoie (FR)
(72) Inventeur: JAFFRENNOU, Boris, 75019 PARIS (FR); OBERT, Edouard, 60700 FLEURINES (FR)
(74) Mandataire: Saint-Gobain Recherche

(56) Documents cités:
- EP-A1- 2 223 941
- EP-A2- 0 044 614
- US-A- 2 875 073
- US-A- 4 183 997
- US-A- 4 524 164

## Description

La présente invention se rapporte au domaine des produits d'isolation, thermiques et/ou acoustique, à base de fibres minérales, liées par un liant exempt de formaldéhyde, dont les fibres sont sous la forme de laine minérale, notamment de verre ou de roche.

L'invention a ainsi pour objet un produit isolant acoustique et/ou thermique à base de laine minérale encollée à l'aide d'une composition d'encollage apte à réticuler pour former un liant, exempte de formaldéhyde pour les fibres minérales, qui renferme au moins un sucre non réducteur et au moins un sel d'ammonium d'acide inorganique, ainsi que le procédé de fabrication de produits d'isolation thermiques et/ou acoustique ou d'un voile de fibres minérales.

La fabrication de produits d'isolation à base de laine minérale comprend généralement une étape de fabrication de la laine elle-même, qui peut être mise en œuvre par différents procédés, par exemple selon la technique connue du fibrage par centrifugation interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées vers un organe récepteur pour former une nappe de fibres (ou laine minérale).

La centrifugation externe consiste, elle, à déverser la matière en fusion à la surface périphérique externe d'organes rotatifs appelés rotors, d'où ladite matière est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on applique sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, afin d'éviter la formation de chaînes longues peu hydrosolubles qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée (à son tour dégradée au moins partiellement en ammoniaque) qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues.

Une première solution se fonde sur l'emploi d'un polymère d'acide carboxylique, notamment d'acide acrylique.

Dans US 5 340 868, l'encollage comprend un polymère polycarboxylique, un β-hydroxyiamide et un acide carboxylique monomérique au moins trifonctionnel.

D'autres compositions d'encollage ont été proposées qui comprennent un polymère polycarboxylique, un polyol et un catalyseur, lequel catalyseur pouvant être un composé contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Les compositions d'encollage à base d'un polymère polycarboxylique et d'un polyol peuvent en outre comprendre un tensioactif cationique, amphotère ou non ionique (US 2002/0188055), un agent de couplage de type silane (US 2004/0002567) ou une dextrine en tant que co-liant (US 2005/0215153).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Une deuxième solution de remplacement des résols se fonde sur l'association d'un saccharide et d'un acide polycarboxylique.

Dans US 5 895 804, il est décrit une composition adhésive à base de polysaccharides thermoréticulables pouvant être utilisée en tant qu'encollage pour de la laine minérale. La composition renferme un polymère polycarboxylique ayant au moins deux groupes fonctionnels acide carboxylique et un poids moléculaire au moins égal à 1000, et un polysaccharide ayant un poids moléculaire au moins égal à 10000.

Dans WO 2009/080938, la composition d'encollage comprend un monosaccharide et/ou un polysaccharide et un acide organique polycarboxylique de masse molaire inférieure à 1000.

On connaît également une composition d'encollage aqueuse sans formaldéhyde qui comprend un produit de réaction de Maillard, en particulier associant un sucre réducteur, un acide carboxylique et de l'ammoniaque (WO 2007/014236). Dans WO 2009/019232 et WO 2009/019235, il est proposé de substituer l'acide carboxylique par un précurseur d'acide dérivé d'un sel inorganique, notamment un sel d'ammonium qui présente l'avantage supplémentaire de pouvoir remplacer tout ou partie de l'ammoniaque.

Dans EP 2 2 223 941 A1, des produits isolants acoustique et/ou thermique sous forme de matériau composite comprenant des fibres, notamment des fibres minérales, sont décrits. Ces fibres sont liées à l'aide d'une composition aqueuse thermoréticulable exempte de formaldéhyde comprenant un hydrate de carbone tel qu'un sucre et un ou plusieurs sels d'ammonium d'un acide inorganique, sans toutefois divulguer la combinaison spécifique de sucre non-réducteur et de sulfate d'ammonium.

Il existe un besoin de disposer de compositions d'encollage sans formaldéhyde qui permettent de fabriquer de produits à base de fibres minérales, présentant une bonne résistance au vieillissement, notamment en milieu humide.

La présente invention a pour but de proposer une composition d'encollage pour fibres minérales, plus particulièrement de verre ou de roche, qui remédie aux inconvénients précités.

La composition d'encollage mise en oeuvre pour fabriquer les produits isolant acoustique et/ou thermique à base de laine minérale selon l'invention comprend :
- au moins un sucre non réducteur, et
- au moins un sel d'ammonium d'acide inorganique qui est le sulfate d'ammonium,
ledit sel d'ammonium d'acide inorganique représentant 1 à 30% en poids du poids total du mélange constitué par le sucre non réducteur et le sel d'ammonium d'acide inorganique.

L'expression « sucre non réducteur » doit être entendue au sens conventionnel, à savoir qu'elle se rapporte à un sucre constitué de plusieurs motifs saccharidiques dont le carbone 1 porteur du groupe OH hémiacétalique est engagé dans une liaison.

Le sucre non réducteur conforme à la présente invention est un oligoholoside non réducteur renfermant au plus 10 motifs saccharidiques.

A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose.

On préfère le saccharose et le tréhalose, et mieux encore le saccharose.

Le sel d'ammonium d'acide inorganique réagit avec le sucre non réducteur sous l'effet de la chaleur pour former un réseau polymérique qui constitue le liant final. Le réseau polymérique ainsi formé permet d'établir des liaisons entre les fibres minérales, en particulier au niveau des points de jonction des fibres dans de la laine minérale ce qui confère au produit final une certaine « élasticité » propre à assurer une bonne reprise en épaisseur après déballage du produit.

Le sel d'ammonium d'acide inorganique est un sulfate d'ammonium, notamment l'hydrogénosulfate d'ammonium NH₄HSO₄ et le sulfate d'ammonium (NH₄)₂SO₄.

Dans la composition d'encollage, le sel d'ammonium d'acide inorganique représente 1 à 30 % en poids du poids total du mélange constitué par le sucre non réducteur et le sel d'ammonium d'acide inorganique, de préférence 3 à 20 %, et avantageusement 5 à 15 %.

La composition d'encollage ne contient aucun acide organique polycarboxylique de masse molaire inférieure à 1000, et généralement est totalement exempte d'acide organique polycarboxylique.

La composition d'encollage peut comprendre en sus des composés mentionnés, les additifs conventionnels ci-après dans les proportions suivantes calculées sur la base de 100 parts en poids de sucre non réducteur et de sel d'ammonium d'acide inorganique :
- 0 à 2 parts de silane, en particulier un aminosilane,
- 0 à 20 parts d'huile, de préférence 4 à 15 parts,
- 0 à 20 parts de glycérol, de préférence 0 à 10 parts,
- 0 à 5 parts d'un silicone,
- 0 à 30 parts d'un « extendeur ».

Le rôle des additifs est connu et brièvement rappelé : le silane est un agent de couplage entre les fibres et le liant, qui joue également le rôle d'agent anti-vieillissement ; les huiles sont des agents anti-poussières et hydrophobes ; le glycérol joue le rôle de plastifiant et permet d'éviter la prégélification de la composition d'encollage ; le silicone est un agent hydrophobe qui a pour fonction de réduire l'absorption d'eau par le produit d'isolation ; l'« extendeur » est une charge organique ou inorganique, soluble ou dispersable dans la composition d'encollage qui permet notamment de diminuer le coût de la composition d'encollage.

La composition d'encollage présente un pH qui varie selon la nature du sel d'ammonium d'acide inorganique utilisé, en général de 6 à 9, avantageusement de 7 à 8.

Comme déjà indiqué, les fibres minérales peuvent être des fibres de verre, notamment de verre E, C, R ou AR (alcali-résistant), ou des fibres de roche, notamment de basalte (ou wollastonite). Ces fibres peuvent encore être des fibres renfermant plus de 96 % en poids de silice et des fibres de céramique à base d'au moins un oxyde, un nitrure ou d'un carbure de métal ou de métalloïde, ou d'un mélange de ces composés, en particulier d'au moins un oxyde, un nitrure ou un carbure d'aluminium, de zirconium, de titane, de bore ou d'yttrium.

De manière classique, la composition d'encollage est appliquée sur les fibres minérales à la sortie du dispositif de fibrage et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température de l'ordre de 100 à 200°C, généralement à une température comparable à celle d'une résine formophénolique classique, notamment supérieure ou égale à 110°C, de préférence inférieure ou égale à 170°C.

Ces produits isolants acoustiques et/ou thermiques obtenus à partir de ces fibres encollées se présentent généralement sous la forme d'un matelas, d'un feutre, de panneaux, de blocs, de coquilles ou autres formes moulées à base de laine minérale, de verre ou de roche.

La composition d'encollage peut aussi être utilisée pour fabriquer des voiles (aussi appelés « non-tissés » ou « intissés ») et de tissus enduits ou imprégnés, en particulier à base de fibres minérales telles que des fibres de verre ou de roche.

Les voiles de fibres minérales trouvent leur usage notamment en tant que revêtement de surface de produits d'isolation thermique et/ou acoustique à base de laine minérale ou d'une mousse.

L'invention a encore pour objet un procédé de fabrication d'un produit isolant thermique et/ou acoustique à base de laine minérale ou d'un voile de fibres minérales selon lequel on fabrique la laine minérale ou les fibres minérales, on applique sur ladite laine ou lesdites fibres une composition selon l'invention et on traite ladite laine ou lesdites fibres à une température permettant la réticulation de l'encollage et la formation d'un liant infusible, par exemple dans les conditions thermiques décrites précédemment.

L'application de l'encollage peut être effectuée par tout moyen approprié, par exemple par projection, pulvérisation, atomisation, enduction ou imprégnation.

Les exemples qui suivent permettent d'illustrer l'invention sans toutefois la limiter.

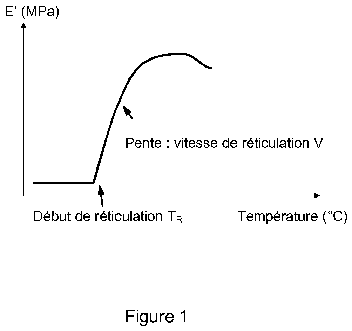

Dans ces exemples, on mesure :
- la température de début de réticulation (T_{R}) et la vitesse de réticulation (V) par la méthode Dynamic Mechanical Analysis (DMA) qui permet de caractériser le comportement viscoélastique d'un matériau polymérique. On procède comme suit: un échantillon de papier Whatmann est imprégné de la composition d'encollage (teneur en matières solides organiques de l'ordre de 40 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe la valeur de température, en °C, de début de réticulation (T_{R}) et la pente correspondant à la vitesse de réticulation, en MPa/°C.
- la viscosité, exprimée en mPa.s, à l'aide d'un rhéomètre de type rotationnel plan-plan avec un cisaillement de 100 s⁻¹, à 25°C. L'échantillon a une teneur en matières solides égale à 30 % en poids.
- l'angle de contact de la composition d'encollage, à 30 % en poids de matières solides, sur un support en verre.
- la contrainte à la rupture d'un échantillon de voile de 5 cm x 21 cm fixé à une extrémité sur un banc de traction et soumis à une élongation continue de 40 mm/minute. La contrainte à la rupture est exprimée en N/5 cm.

La contrainte à la rupture est mesurée après la fabrication (initiale) et après que l'échantillon a été traité dans des conditions de vieillissement accéléré dans de l'eau à 80°C pendant 10 minutes. On exprime le résultat par le pourcentage de rétention qui est égal à :
(contrainte à la rupture après traitement/contrainte à la rupture initiale) x 100.
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).
- l'épaisseur initiale du produit d'isolation et l'épaisseur après 1 heure et 24 heures sous compression avec un taux de compression (défini comme étant le rapport de l'épaisseur nominale à l'épaisseur sous compression) égal à 4,8/1. Les mesures d'épaisseur permettent d'évaluer la bonne tenue dimensionnelle du produit.
- le coefficient de conductivité thermique λ selon la norme EN 13162, exprimé en W/(m x K).

### EXEMPLES 1 A 20 (Exemples 4-8 et 11-20 comparatifs)

a) On prépare une première série de compositions d'encollage comprenant les constituants figurant dans le tableau 1 exprimés en parts pondérales.

Les compositions d'encollage sont préparées en introduisant successivement, dans un récipient contenant de l'eau, le sucre non réducteur ou réducteur et le sel d'ammonium d'acide inorganique sous agitation jusqu'à dissolution complète des constituants.

Les compositions d'encollage des exemples 1 et 4 présentent une vitesse de réticulation plus élevée que les exemples comparatifs 7 et 8, respectivement.

Les exemples 1 à 6 présentent des valeurs faibles de viscosité et d'angle de contact, comparables aux exemples comparatifs 7 et 8, ce qui autorise une bonne application sur les fibres minérales, notamment par pulvérisation.

b) On prépare une deuxième série de compositions d'encollage comprenant les constituants figurant dans le tableau 2 exprimé en parts pondérales.

Les compositions d'encollage sont préparées dans les conditions exposées pour la première série.

### - Essai 1

On immerge un voile de fibres de verre (Whatman GF/A, 50 g/m² ; commercialisé par la société Whatman) dans la composition d'encollage (13 % de matières solides) pendant 2 minutes puis on élimine l'excès d'encollage par aspiration. Le voile est ensuite traité dans une étuve à 200°C pendant 135 secondes. Au final, le voile contient 45 % en poids de liant réticulé. Les valeurs de la contrainte à la rupture et du pourcentage de rétention sont donnés dans le tableau 2.

### - Essai 2

On immerge un voile de fibres de verre (Whatman GF/A, 50 g/m² ; commercialisé par la société Whatman) dans la composition d'encollage (13 % de matières solides) pendant 2 minutes puis on élimine l'excès d'encollage par aspiration. Le voile est ensuite traité dans une étuve à 200°C pendant 5 minutes. Au final, le voile contient 45 % en poids de liant réticulé.

On immerge le voile dans de l'eau à 60°C pendant 3 heures, puis on le sèche dans une étuve à 60°C pendant 1 heure. On mesure la part de liant réticulé insoluble dans l'eau restant sur le voile (en %) par pesée avant et après immersion dans l'eau. Les résultats figurent dans le tableau 2.

Les exemples 3, 2 et 9 d'une part, et 6 et 5 d'autre part, ont une contrainte à la rupture initiale plus élevée que les exemples comparatifs correspondants 11 à 14, et 17 et 18.

Les exemples 3, 2, 9 et 10 contenant du sulfate d'ammonium ont un pourcentage de rétention plus élevé que les exemples comparatifs 11 à 14. Les exemples 15 et 16 contenant une proportion élevée de sulfate diammonique ont une résistance au vieillissement humide plus importante que les exemples comparatifs 19 et 20.

La proportion de liant restant sur le filtre après traitement dans l'eau est plus importante dans les exemples selon l'invention (3, 2, 9 et 10, et 6, 5, 15 et 16) que dans les exemples comparatifs respectifs (11 à 14 et 17 à 20).

Les essais 1 et 2 démontrent que la composition d'encollage selon l'invention a la capacité de lier efficacement les fibres d'un voile dans des conditions de vieillissement accéléré en milieu humide. L'application de la composition d'encollage n'est pas limitée aux voiles et peut être étendue aux autres produits fibreux mentionnés précédemment, notamment aux tissus et aux produits où les fibres se présentent sous la forme de laine minérale pour des applications en tant que produits isolants thermiques et/ou acoustiques.

### EXEMPLES 21 ET 22 (Exemple 22 comparatif)

Ces exemples illustrent la fabrication de produits isolants sur une ligne à échelle industrielle.

On utilise les compositions d'encollage des exemples 1 et 7 (comparatif) auxquelles on ajoute les additifs suivants, pour 100 parts en poids de sucre et de sulfate d'ammonium : 1 part de γ-aminopropyitriéthoxsilane et 8 parts d'une huile minérale. Ces compositions d'encollage constituent les exemples 21 et 22 (comparatif), respectivement.

On fabrique de la laine de verre sur une ligne pilote par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande de 2,4 m de large équipé de caissons d'aspiration internes qui retiennent la laine minérale sous forme d'une nappe à la surface du convoyeur. La nappe passe en continu dans une étuve maintenue à 270°C où les constituants de l'encollage polymérisent pour former un liant. Le produit d'isolation final a une densité nominale égale à 17,5 kg/m³.

Les produits d'isolation présentent les propriétés suivantes :

| | | **Ex. 21** | **Ex. 22 (comp.)** |
|---|---|---|---|
| **Résistance en traction (N)** | | | |
| | initiale | 4,5 | 4,2 |
| | après vieillissement (RT15) | 4,3 | 3,8 |
| | perte (%) | 4 | 10 |

| **Epaisseur (mm)** | | | |
|---|---|---|---|
| | après 1 heure | 106 | 102 |
| | après 24 heures | 104 | 100 |
| **Perte au feu (%)** | | 6,0 | 6,0 |
| λ **(W/(m x K)** | | 0,035 | 0,035 |

Le produit d'isolation selon l'exemple 21 présente une résistance en traction initiale plus élevée que celui de l'exemple 22 comparatif. La résistance en traction après vieillissement de l'exemple 21 est aussi plus importante, la perte de résistance en traction étant de 4 % au lieu de 10 % pour l'exemple 22 comparatif.

Le produit d'isolation selon l'exemple 21 a en outre une épaisseur initiale légèrement augmentée par rapport à l'exemple 22 comparatif.

**Tableau 1**

| Exemple | | 1 | 2 | 3 | 4 | 5 | 6 | 7 (Comp.) | 8 (Comp.) |
|---|---|---|---|---|---|---|---|---|---|
| **Composition d'encollage** | | | | | | | | | |
| | Saccharose | 85 | 90 | 95 | 85 | 90 | 95 | - | - |
| | Glucose | - | - | - | - | - | - | 85 | 85 |
| | Sulfate d'ammonium | 15 | 10 | 5 | - | - | - | 15 | - |
| | Phosphate diammonique | - | - | - | 15 | 10 | 5 | - | 15 |

| **Propriétés** | | | | | | | | | |
|---|---|---|---|---|---|---|---|---|---|
| | Temp. début réticulation T_{R}(°C) | 137 | 141 | 146 | 144 | 149 | 158 | 140 | 132 |
| | Vitesse V (MPa/°C) | 86,7 | 64,2 | 58,8 | 49,3 | 51,7 | 30,6 | 54,5 | 26,7 |
| | Viscosité (mPa.s) | 5,4 | 5,5 | 5,4 | 5,4 | 5,5 | 5,5 | 5,4 | 5,4 |
| | Angle de contact (°) | 17 | 18 | 20 | 17 | 18 | 17 | 19 | 18 |
| | pH⁽¹⁾ | 7,2 | 7,2 | 7,3 | 8,0 | 7,9 | 7,8 | 7,5 | 7,1 |

| | | | | | | | | | |
|---|---|---|---|---|---|---|---|---|---|
| ⁽¹⁾ teneur en matières solides : 30 % | | | | | | | | | |

**Tableau 2**

| Exemple | | | 3 | 2 | 9 | 10 | 11 (comp.) | 12 (comp.) | 13 (comp.) | 14 (comp.) |
|---|---|---|---|---|---|---|---|---|---|---|
| **Composition de liant** | | | | | | | | | | |
| | Saccharose | | 95 | 90 | 83 | 77 | - | - | - | - |
| | Glucose | | - | - | - | - | 95 | 90 | 83 | 77 |
| | Sulfate d'ammonium | | 5 | 10 | 17 | 23 | 5 | 10 | 17 | 23 |
| | Phosphate diammonique | | - | - | - | - | - | - | - | - |

| **Propriétés** | | | | | | | | | | |
|---|---|---|---|---|---|---|---|---|---|---|
| | Contrainte à la rupture (N/cm) | | | | | | | | | |
| | | - initiale | 104 | 120 | 130 | 109 | 100 | 96 | 111 | 115 |
| | | - % rétention | 22 | 46 | 65 | 66 | 9 | 30 | 52 | 61 |
| | Part insoluble (%) | | 81,5 | 85,9 | 83,9 | 81,9 | 76,2 | 75,3 | 76,0 | 79,9 |

**Tableau 2 (suite)**

| Exemple | | | 6 | 5 | 15 | 16 | 17 (comp.) | 18 (comp.) | 19 (comp.) | 20 (comp.) |
|---|---|---|---|---|---|---|---|---|---|---|
| **Composition de liant** | | | | | | | | | | |
| | Saccharose | | 95 | 90 | 83 | 77 | - | - | - | - |
| | Glucose | | - | - | - | - | 95 | 90 | 83 | 77 |
| | Sulfate d'ammonium | | - | - | - | - | - | - | - | - |
| | Phosphate diammonique | | 5 | 10 | 17 | 23 | 5 | 10 | 17 | 23 |

| **Propriétés** | | | | | | | | | | |
|---|---|---|---|---|---|---|---|---|---|---|
| | Contrainte à la rupture (N/cm) | | | | | | | | | |
| | | - initiale | 83 | 120 | 99 | 120 | 65 | 99 | 118 | 131 |
| | | - % rétention | 11 | 53 | 86 | 68 | 10 | 53 | 58 | 53 |
| | Part insoluble (%) | | 87,6 | 97,9 | 95,3 | 93,7 | 86,7 | 91,6 | 91,9 | 85,6 |

## Revendications

1. Produit isolant acoustique et/ou thermique à base de laine minérale encollée à l'aide d'une composition d'encollage exempte de formaldéhyde pour les fibres minérales, **caractérisée en ce que** ladite composition comprend
- au moins un sucre non réducteur, et
- au moins un sel d'ammonium d'acide inorganique qui est le sulfate d'ammonium,
ledit sel d'ammonium d'acide inorganique représentant 1 à 30% en poids du poids total du mélange constitué par le sucre non réducteur et le sel d'ammonium d'acide inorganique.

2. Produit isolant selon la revendication 1, **caractérisée en ce que** le sucre non réducteur est un oligoholoside renfermant au plus 10 motifs saccharidiques.

3. Produit isolant selon la revendication 2, **caractérisée en ce que** le sucre non réducteur est un di-, tri-, tétra- ou pentaholoside.

4. Produit isolant selon l'une des revendications 1 à 3, **caractérisée en ce que** le sucre non réducteur est le tréhalose, les isotréhaloses, le saccharose, le mélézitose, le gentianose, le raffinose, l'erlose, l'umbelliférose, le stachyose ou le verbascose.

5. Produit isolant selon la revendication 4, **caractérisée en ce que** le, sucre non réducteur est le saccharose.

6. Produit isolant selon l'une des revendications 1 à 5, **caractérisée en ce que** le sel d'ammonium d'acide inorganique représente 3 à 20% en poids du poids total du mélange constitué par le sucre non réducteur et le sel d'ammonium d'acide inorganique.

7. Produit isolant selon l'une des revendications 1 à 6, **caractérisée en ce que** la composition comprend en outre les additifs ci-après dans les proportions suivantes calculées sur la base de 100 parts en poids de sucre non réducteur et de sel d'ammonium d'acide inorganique :
- 0 à 2 parts de silane,
- 0 à 20 parts d'huile,
- 0 à 20 parts de glycérol,
- 0 à 5 parts d'un silicone,
- 0 à 30 parts d'un extendeur choisi parmi les charges organiques ou inorganiques solubles ou dispersables dans la composition d'encollage.

8. Produit isolant selon l'une des revendications 1 à 7, **caractérisé en ce que** les fibres minérales sont des fibres de verre, des fibres de roche, des fibres renfermant plus de 96 % en poids de silice ou des fibres de céramique à base d'au moins un oxyde, un nitrure ou un carbure de métal ou de métalloïde ou un mélange de ces composés.

9. Produit selon l'une des revendications 1 à 8, **caractérisé en ce qu'il** s'agit d'un voile de fibres minérales.

10. Procédé de fabrication d'un produit isolant acoustique et/ou thermique selon l'une des revendications 1 à 8 ou d'un voile selon la revendication 9, selon lequel on fabrique la laine minérale ou les fibres minérales, on applique sur ladite laine ou lesdites fibres une composition d'encollage et on traite ladite laine ou lesdites fibres à une température permettant la réticulation de l'encollage et la formation d'un liant infusible, **caractérisé en ce qu'**on utilise une composition d'encollage comprenant
- au moins un sucre non réducteur, et
- au moins un sel d'ammonium d'acide inorganique qui est le sulfate d'ammonium,
ledit sel d'ammonium d'acide inorganique représentant 1 à 30% en poids du poids total du mélange constitué par le sucre non réducteur et le sel d'ammonium d'acide inorganique.

## Patentansprüche

1. Schall- und/oder hitzedämmendes Produkt auf Basis von Mineralwolle, die mit Hilfe einer formaldehydfreien Kleber-Zusammensetzung für Mineralfasern geklebt wird, **dadurch gekennzeichnet, dass** die Zusammensetzung Folgendes umfasst:
- mindestens einen nicht reduzierenden Zucker, und
- mindestens ein Ammoniumsalz einer anorganischen Säure, bei dem es sich um Ammoniumsulfat handelt,
wobei das Ammoniumsalz einer anorganischen Säure 1 bis 30 Gew.-% des Gesamtgewichts der Mischung ausmacht, die aus dem nicht reduzierenden Zucker und dem Ammoniumsalz einer anorganischen Säure besteht.

2. Dämmendes Produkt nach Anspruch 1, **dadurch gekennzeichnet, dass** der nicht reduzierende Zucker ein Oligosaccharid ist, welches höchstens 10 Saccharideinheiten aufweist.

3. Dämmendes Produkt nach Anspruch 2, **dadurch gekennzeichnet, dass** der nicht reduzierende Zucker ein Di-, Tri-, Tetra- oder Pentasaccharid ist.

4. Dämmendes Produkt nach einem der Ansprüche 1 bis 3, **dadurch gekennzeichnet, dass** der nicht reduzierende Zucker Trehalose, Isotrehalosen, Saccharose, Melezitose, Gentianose, Raffinose, Erlose, Umbelliferose, Stachyose oder Verbascose ist.

5. Dämmendes Produkt nach Anspruch 4, **dadurch gekennzeichnet, dass** der nicht reduzierende Zucker Saccharose ist.

6. Dämmendes Produkt nach einem der Ansprüche 1 bis 5, **dadurch gekennzeichnet, dass** das Ammoniumsalz einer anorganischen Säure 3 bis 20 Gew.-% des Gesamtgewichts der Mischung ausmacht, die aus dem nicht reduzierenden Zucker und dem Ammoniumsalz einer anorganischen Säure besteht.

7. Dämmendes Produkt nach einem der Ansprüche 1 bis 6, **dadurch gekennzeichnet, dass** die Zusammensetzung außerdem folgende Zusatzstoffe in folgenden Anteilen, berechnet auf Basis von 100 Gewichtsteilen von nicht reduzierendem Zucker und Ammoniumsalz einer anorganischen Säure, Folgendes umfasst:
- 0 bis 2 Teile Silan,
- 0 bis 20 Teile Öl,
- 0 bis 20 Teile Glycerin,
- 0 bis 5 Teile eines Silikons,
- 0 bis 30 Teile eines Streckmittels, ausgewählt aus organischen oder anorganischen Füllstoffen, die in der Kleber-Zusammensetzung löslich oder dispergierbar sind.

8. Dämmendes Produkt nach einem der Ansprüche 1 bis 7, **dadurch gekennzeichnet, dass** es sich bei den Mineralfasern um Glasfasern, Gesteinsfasern, Fasern mit einem Siliziumdioxidanteil von mehr als 96 Gew.-% oder Keramikfasern auf Basis mindestens eines Metalloxids, -nitrids oder -carbids oder Metalloidoxids, -nitrids oder -carbids oder einer Mischung dieser Verbindungen handelt.

9. Produkt nach einem der Ansprüche 1 bis 8, **dadurch gekennzeichnet, dass** es sich um ein Mineralfaservlies handelt.

10. Verfahren zur Herstellung eines schall- und/oder hitzedämmenden Produkts nach einem der Ansprüche 1 bis 8 oder eines Vlieses nach Anspruch 9, wobei Mineralwolle oder Mineralfasern hergestellt werden, eine Kleber-Zusammensetzung auf die Wolle oder Fasern aufgebracht wird und die Wolle oder Fasern bei einer Temperatur behandelt werden, die die Vernetzung der Klebung und die Bildung eines unschmelzbaren Bindemittels ermöglicht, **dadurch gekennzeichnet, dass** eine Kleber-Zusammensetzung verwendet wird, die Folgendes umfasst:
- mindestens einen nicht reduzierenden Zucker, und
- mindestens ein Ammoniumsalz einer anorganischen Säure, bei dem es sich um Ammoniumsulfat handelt,
wobei das Ammoniumsalz einer anorganischen Säure 1 bis 30 Gew.-% des Gesamtgewichts der Mischung ausmacht, die aus dem nicht reduzierenden Zucker und dem Ammoniumsalz einer anorganischen Säure besteht.

## Claims

1. Acoustic and/or thermal insulation product based on mineral wool sized using a sizing composition for mineral fibers, which is formaldehyde-free, **characterized in that** said sizing composition comprises:
- at least one non-reducing sugar, and
- at least one inorganic acid ammonium salt which is ammonium sulfate,
said inorganic acid ammonium salt representing from 1 to 30% by weight of the total weight of the mixture consisting of the non-reducing sugar and the inorganic acid ammonium salt.

2. The insulating product according to claim 1, **characterized in that** the non-reducing sugar is an oligoholoside including at most 10 saccharide units.

3. The insulating product according to claim 2, **characterized in that** the non-reducing sugar is a di-, tri-, tetra- or pentaholoside.

4. The insulating product according to any claims 1 to 3, **characterized in that** the non-reducing sugar is trehalose, isotrehaloses, sucrose, melezitose, gentianose, raffinose, erlose, umbelliferose, stachyose or verbascose.

5. The insulating product according to claim 4, **characterized in that** the non-reducing sugar is sucrose.

6. The insulating product according to any of claims 1 to 5, **characterized in that** the inorganic acid ammonium salt representing from 3 to 20% by weight of the total weight of the mixture consisting of the non-reducing sugar and the inorganic acid ammonium salt.

7. The insulating product according to any of claims 1 to 6, **characterized in that** the sizing composition additionally comprises the additives below in the following proportions, calculated on the basis of 100 parts by weight of non-reducing sugar and of inorganic acid ammonium salt:
- from 0 to 2 parts of silane,
- from 0 to 20 parts of oil,
- from 0 to 20 parts of glycerol,
- from 0 to 5 parts of a silicone,
- from 0 to 30 parts of an extender selected from organic or inorganic fillers which are soluble or dispersible in the sizing composition.

8. The insulation product according to any of claims 1 to 7, **characterized in that** the mineral fibers are glass fibers, rock fibers, or fibers including more than 96% by weight of silica or of ceramic fibers based on at least one oxide, nitride or carbide of a metal or semimetal, or a mixture of these compounds.

9. The insulation product according to any of claims 1 to 8, **characterized in that** it is a veil of mineral fibers.

10. A process for the manufacture of an acoustic and/or thermal insulating product according to any of claims 1 to 8 or a veil as claimed in claim 9, according to which the mineral wool or the mineral fibers are manufactured, a sizing composition is applied to said wool or said fibers and said wool or said fibers is/are treated at a temperature which makes possible the crosslinking of the size and the formation of an infusible binder, **characterized in that** a sizing composition comprising the following features is used:
- at least one non-reducing sugar, and
- at least one inorganic acid ammonium salt which is the ammonium sulfate,
said inorganic acid ammonium salt representing from 1 to 30% by weight of the total weight of the mixture consisting of the non-reducing sugar and the inorganic acid ammonium salt.
